# EUROPEAN PATENT APPLICATION

(11) **EP 3 633 567 A1**
(43) Date of publication of application: **08.04.2020**
(21) Application number: 18806921.5
(22) Date of filing: 22.05.2018
(51) Int. Cl.: G06Q 10/10, G06F 9/44

(54) **METHOD FOR SETTING UP APPROVAL ROLE ACCORDING TO DEPARTMENT BY APPROVAL NODE IN WORKFLOW**

(30) Priority: 23.05.2017 CN 201710369528
(71) Applicant: Chengdu Qianniucao Information Technology Co., Ltd, Chengdu, Sichuan 610000 (CN)
(72) Inventor: CHEN, Dazhi, Meishan Sichuan 620000 (CN)
(74) Representative: Bandpay & Greuter
(86) International application number: PCT/CN2018/087921
(87) International publication number: WO 2018/214891

(57) **Abstract**

A method for setting up an approval role according to a department by an approval node in a workflow is disclosed in the present invention, including: creating departments and roles included in a system organization structure; setting a department supervisor role in each department; displaying candidate departments when setting an approval node of a workflow; and selecting one or more departments from the candidate departments, wherein the department supervisor role in the selected department serves as an approval role of said approval node. In the present invention, personnel who are responsible for setting a system workflow only need to select a corresponding department when setting an approval role, and then a department supervisor role in the department serves as the approval role. Even if the department supervisor role in the department has changed, the current department supervisor role in the department serves as the approval role, and the approval role does not need to be reset. Accordingly, the operations are convenient and rapid, and errors are unlikely to occur. The subject of an approval operation in a workflow is a role, and the role is an independent individual. Even if an employee or a user has changed, it is only necessary to relate a new employee to the role in the approval process, and therefore, the settings are convenient.

## Description

### BACKGROUND

### Technical Field

The present invention relates to a setting and management method for an approval role at an approval node in a workflow in a management software system such as an ERP system, and in particular, to a method for setting up an approval role according to a department by an approval node in a workflow.

### Related Art

Role-based access control (RBAC) is one of the most researched and mature permission management mechanisms for databases in recent years. It is considered to be an ideal candidate to replace conventional mandatory access control (MAC) and discretionary access control (DAC). Conventional discretionary access control has high flexibility but low security. Mandatory access control is highly secure but too restrictive. Role-based access control combines both above, and not only is easy to manage, but also reduces complexity, costs, and probability of errors. Therefore, it has been greatly developed in recent years. The basic idea of role-based access control (RBAC) is to divide different roles according to different functional positions in the enterprise organization view, encapsulate the access permission of database resources in roles, and allow users to indirectly access database resources by assigning different roles to the users.

A large number of tables and views are often built in large-scale application systems, which makes the management and permissions of database resources very complicated. It is very difficult for the user to directly manage the access and permissions of the database resources. It requires the user to have a very thorough understanding of the database structure and to be familiar with the use of the SQL language. Once the application system structure or security requirements have changed, a large number of complex and cumbersome permission changes are required, and the security vulnerabilities caused by unexpected authorization errors are very likely to occur. Therefore, designing a simple and efficient permission management method for large-scale application systems has become a common requirement for systems and system users.

The role-based permission control mechanism can manage the access permissions of the system simply and efficiently, which greatly reduces the burden and cost of the system permission management, and makes the system permission management more compliant with the business management specifications of the application system.

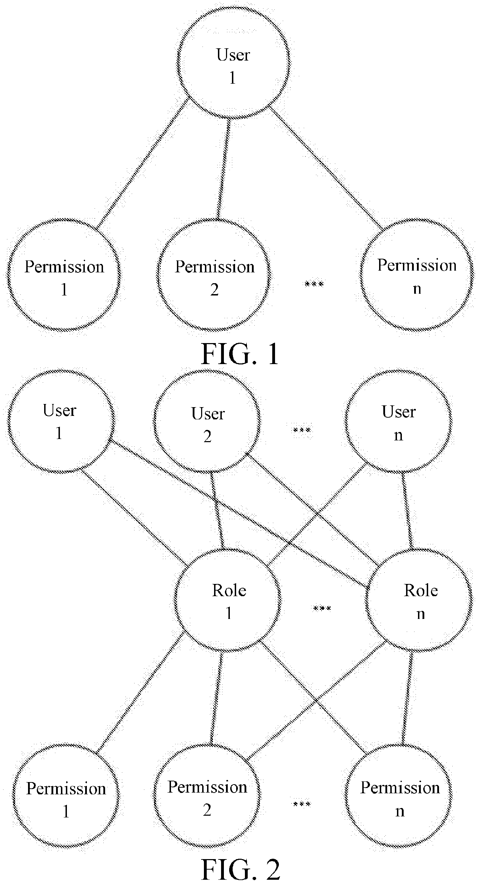

However, the conventional role-based permission management and workflow control methods for a user adopt the "role-to-user one-to-many" relation mechanism, where the "role" is a group or class in nature. That is, one role can simultaneously correspond to or be related to multiple users, and the role is similar to a post or a position or a type of work or other concepts. The permission granted to a user under this relation mechanism is basically divided into the following three forms: 1. As shown in FIG. 1, the permission is directly granted to the user, where the disadvantage is that the workload is large and the operation is frequent and cumbersome. In the approval process, the approval operation subject of the approval node is the user, and at the workflow approval node, an employee or user is selected directly as an approval subject. When changes on the employee have occurred (such as transfer or demission), all processes related to the employee shall be adjusted accordingly. Especially, for changes on an employee in a management position of an enterprise, many approval processes are involved. As the adjustment of the processes involves large workloads and is cumbersome, errors or omissions are likely to occur, affecting the normal operation of the enterprise and even causing unpredictable losses.

Even if the change only occurs in the approval permissions of the employee, it is still necessary to correspondingly adjust the processes related to the employee, and similar problems described above still occur.

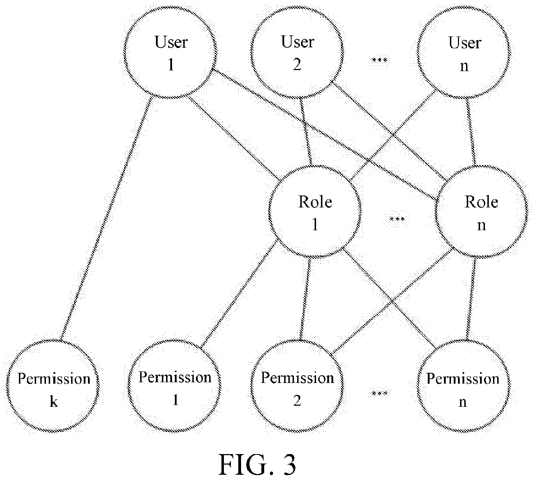

2. As shown in FIG. 2, the role (of a class/group/post/work type nature) is authorized (one role may be related to multiple users), the user obtains permissions through its role, and the approval operation subject is the role of a group or class nature. 3. As shown in FIG. 3, the above two methods are combined.

In the above descriptions, as both 2 and 3 need to authorize the role of a class or group nature. The way of authorization and workflow control through the role of a class/group/post/work type nature has the following disadvantages: 1. Operations are difficult when the user's permission has changed. In the actual process of using a system, the user's permissions often need to be adjusted during the operation process. For example, in processing of the change in an employee's permissions, when the permissions of an employee related to the role have changed, it is improper to change the permissions of the entire role due to the change in the permissions of the individual employee, because this role is also related to other employees whose permissions remain unchanged. To cope with this situation, either a new role is created to fit the employee whose permissions have changed, or permissions are directly granted to the employee (disengaged from the role) based on permission requirements. The above two processing methods not only take a long time but also cause mistakes easily for the role authorization in the case of a large number of role permissions. It is cumbersome for a user to operate, and errors occur easily, resulting in loss to the system user.

When the approval permissions of the employee or user have changed, either the employee or the user is disengaged from the role, and at the workflow approval node, the employee or the user is directly selected as an approval subject, or a new role is added to meet the requirements of the approval process. In the first way, when changes on an employee have occurred (such as transfer or demission), all processes related to the employee shall be adjusted accordingly. Especially, for changes on an employee in a management position of an enterprise, many approval processes are involved. As the adjustment of the processes involves large workloads, errors or omissions are likely to occur, affecting the normal operation of the enterprise and even causing unpredictable losses. Even if the change only occurs in the approval permissions of the employee, it is still necessary to correspondingly adjust the processes related to the employee, and similar problems described above still occur. In the second way, adding a new role involves creation, relation, and authorization of the role. Especially when there are many roles and many users related to the roles, it is difficult to remember which users are related to the role.
2. It is difficult to remember the specific permissions contained in a role for a long time. If the role has many permission function points, as time goes by, it is difficult to remember the specific permissions of the role, and it is even more difficult to remember the permission differences between roles with similar permissions. The permissions of similar roles are also easily confusable. If a new user needs to be related, it is impracticable to accurately determine how to select a relation.
3. Because user permissions change, more roles will be created (if new roles are not created, direct authorization to the user will be increased greatly), and it is more difficult to distinguish specific differences between permissions of the roles.
4. When a user is transferred from a post, if many permissions of the transferred user need to be assigned to other users, distinguishing the permissions of the transferred user and creating roles to relate to the other users respectively are necessary during the processing. Such operations are not only complicated and time-consuming, but also prone to errors.

During setting of an approval node in an existing workflow, a corresponding person is generally selected. For a company with many employees, it is complicated to select an employee for approval. In addition, when the employee's responsibilities are adjusted, it is necessary to select a new employee to take the responsibilities, and errors occur easily.

### SUMMARY

### Technical Problems

The object of the present invention is to overcome the deficiencies of the prior art, and provide a method for setting up an approval role according to a department by an approval node in a workflow. During setting of an approval role, it is only necessary to select a corresponding department, and therefore, the operation is convenient.

### Solutions to Problems

### Technical Solutions

The object of the present invention is achieved by the following technical solutions: a method for setting up an approval role according to a department by an approval node in a workflow includes: creating departments and roles included in a system organization structure; setting a department supervisor role in each department; displaying candidate departments when setting an approval node in a workflow; and selecting one or more departments from the candidate departments, where the department supervisor role in the selected department serves as an approval role of said approval node.

Preferably, each role is an independent individual rather than a group or class, one role can only be related to a unique user during the same period, and one user is related to one or more roles.

Preferably, a method for generating the workflow includes: building a three-layer structure model of user-role-permission that includes: a role layer, where an operation subject of process approval in a workflow is a role, each role is an independent individual rather than a group or class, one role can only be related to a unique user during the same period, and one user is related to one or more roles; a permission layer composed of permissions required to be used in the execution of the workflow, where the permissions are directly granted to the role; and a user layer, where a user determines an approval task in the workflow through the related role, and performs an approval operation with the permissions of the related role; using the three-layer structure model to control the workflow, where one approval process includes: one start node initiating the approval process; at least one approval node granting (or setting) an approval permission to a corresponding approval role; and one end node, at which the approval process is ended; and determining, according to a user's related role, an approval task to be processed, and performing an approval operation with the permission of the related role.

Preferably, only a role having the permission to initiate a workflow can initiate or request or submit the workflow as a submission role.

Preferably, the role belongs to a certain department, and the role is authorized according to work content of the role.

Preferably, a name of the role is unique under the department, and a number of the role is unique in a system.

Preferably, during cross-department transfer of the user, the user's relation to the role in the original department is canceled, and the user is related to a role in a new department.

Preferably, the user determines the permissions through its relation to the role, one employee corresponds to one user account, and one user account corresponds to one employee.

Preferably, display forms of the candidate departments include a list, an organization structure tree diagram, and an organization structure architecture diagram.

A method for setting up an approval role according to a department by an approval node in a workflow includes: creating departments and roles included in a system organization structure; setting a department supervisor role in each department; selecting (or configuring) to set an approval role based on a department; displaying candidate departments when setting an approval node in a workflow; and selecting one or more departments from the candidate departments, where the department supervisor role in the selected department serves as an approval role of said approval node.

### Beneficial Effects of the Invention

### Beneficial Effects

The present invention has the following beneficial effects:
(1) personnel who are responsible for setting a system workflow only need to select a corresponding department when setting an approval role, and then a department supervisor role in the department serves as the approval role. Even if the department supervisor role in the department has changed, the current department supervisor role in the department serves as the approval role, and the approval role does not need to be reset. Accordingly, the operations are convenient and rapid, and errors are unlikely to occur.
   For example, when asking for a leave, an employee in a company needs approval by an administrative department. In the present invention, it is only necessary to select the administrative department from approval nodes. A department supervisor role in the administrative department serves as an approval role, and an employee corresponding to the department supervisor role obtains an approval task through the department supervisor role and gives approval according to related permissions of the department supervisor role. It is unnecessary to select a specific employee for approval setting, such that the operation is easy and convenient. When the department supervisor role in the administrative department changes from a role A to a role B, an employee corresponding to the role B performs the approval, without the need to set an approval role again.
(2) The subject of the approval operation in the workflow is the role that is an independent individual rather than a conventional role of a group or class nature. Even if changes on an employee or a user have occurred (such as transfer or demission), it is only necessary to relate the employee to a new role; or if the approval permissions of the employee have changed, it is only necessary to adjust the approval permissions of the role accordingly, but not necessary to reset or adjust processes. As the setting is convenient and no errors or omissions will occur, the normal operation of the enterprise will not be affected, and the reliability of the workflow is greatly improved. The role of a post number nature is taken as the subject of the approval authorization at a node of the approval link. The user determines which approval tasks are available according to the role. The user only needs to perform approval operations based on the permissions of the related role. It is clear and simple to understand that each role of a post number nature or a work station number nature is a minimum unit of the subject of work. The present application can well satisfy different approval requirements of each role.
(3) In the present application, the role is one-to-one related to the user. One role can only be related to a unique user during the same period. The advantage of this is that the permissions can be obtained as long as the user is related to the role (that is, the user obtains the permissions of its related role), and changes in the permissions of the role are much fewer than the changes in the permissions of the user in a conventional mechanism. Few changes occur in the quantity of roles that are each an independent individual in nature (a post number or a work station number in nature). Although there is large employee turnover, few changes occur in the post number/work station number (even there is no change in a certain period, that is, the role does not change). This greatly simplifies user's permission management and reduces system overheads.
(4) The operations such as dynamic management, recruitment, and transfer are simple, convenient, efficient and highly reliable. The application of recruitment or demission or transfer in the approval process is simple. The subject of the approval operation of the workflow is the role. When an employee or a user has changed, the approval process does not need to be reset (it is only necessary for a user to cancel the relation or be related to the role). For the user who is no longer in the role of the post number or work station number, the relation to the role is canceled; and the user who takes over the post number or work station number is related to the role of the post number. Therefore, the user related to the role automatically obtains related tasks and permissions of the role in the approval workflow, without resetting the approval workflow or re-authorizing the role in the workflow, thus greatly improving the efficiency, security, and reliability of the process setting.
   For example, because Zhang San user is transferred or departs from a post, Zhang San no longer works as a role of "purchaser 3", and Zhang San then cancels the relation to the role. Meanwhile, Li Si takes over the work in the role of "purchaser 3", and then Li Si is related to the role, so Li Si automatically obtains the approval tasks and the approval permissions of the role of "purchaser 3" in the approval process.
(5) The conventional permission management mechanism defines the nature of a group, a work type, a class or the like as the role. The role is in a one-to-many relation to the user. In the actual process of using a system, the user's permissions often need to be adjusted during the operation process. For example, in processing of the change in an employee's permissions, when the permissions of an employee related to the role have changed, it is improper to change the permissions of the entire role due to the change of the permissions of the individual employee, because this role is also related to other employees whose permissions remain unchanged. To cope with this situation, either a new role is created to fit the employee whose permissions have changed, or permissions are directly granted to the employee (disengaged from the role) based on permission requirements. The above two processing methods not only take a long time but also cause mistakes easily for the role authorization in the case of a large number of role permissions. It is cumbersome for a user to operate, and errors occur easily, resulting in loss to the system user.
   However, under the method of the present application, as the role is an independent individual, the object can be achieved by changing the permissions of the role. Although the method in the present application seems to increase the workload during system initialization, by means of copying or the like, the role can be created or authorized more efficiently than the conventional roles of a group nature. As it is unnecessary to consider the commonality of the roles of a group nature when satisfying the related users, the solutions in the present application make the permission setting clear and explicit. Especially after the system has been used for a period of time (after the permissions of the user/role have changed dynamically), the solutions in the present application can significantly improve the permission management efficiency for the system user during the use of the system, make the dynamic authorization simpler, more convenient, clearer and more explicit, and improve the efficiency and reliability of the permission setting.
(6) The conventional group-based role authorization method is prone to errors. The method provided in the present application significantly reduces the probability of authorization errors, because the method of the present application only needs to consider the role as an independent individual, without considering the commonality of multiple users related to the role of the group nature under the conventional method. Even if the authorization errors occur, only the user related to the role is affected. However, in the case of the conventional role of the group nature, all users related to the role are affected. Even if the authorization errors occur, the correction method in the present application is simple and takes a short time, while in the case of the conventional role of a group nature, the commonality of the permissions of all users related to the role needs to be considered during the error correction. The modification is cumbersome, complex, and error-prone when the role has many function points, and in many cases, the problem cannot be solved unless a new role is created.
(7) In the conventional group-based role authorization method, if the role has many permission function points, as time goes by, it is difficult to remember specific permissions of the role, and it is even more difficult to remember the differences in permissions between roles with similar permissions. If a new user needs to be related, it cannot be accurately determined how to select a relation. In the method of the present application, the role itself has a nature of a post number or work station number, such that the selection can be made easily.
(8) When a user is transferred from a post, if many permissions of the transferred user need to be assigned to other users, in processing, distinguishing the permissions of the transferred user and creating roles to relate to other users respectively are necessary. The operations are complicated, time-consuming, and prone to errors.
   The method in the present application is as follows: The transferred user is related to several roles. When the user is transferred, the relation between the user and the roles in the original department is first canceled (the canceled roles may be re-related to other users), and then the user is related to a role in a new department. The operation is simple and not error-prone.
(9) The role belongs to a department, and then the department to which the role belongs cannot be replaced. Reasons why the department to which the role belongs cannot be replaced are as follows. Reason 1: As the role in the present application is equivalent to a work station number or a post number in nature, different work station numbers or post numbers have different work content or permissions. For example, a role of a salesperson 1 under a sales department and a role of a developer 1 under a technical department are two completely different work station numbers or post numbers, and have different permissions. Reason 2: If the department (sales department) to which the role of the salesperson 1 belongs is replaced by the technical department without changing the permissions of the role of the salesperson 1, a role that owns the permissions of the sales department exists in the technical department. This leads to management confusion and security vulnerabilities.

### BRIEF DESCRIPTION OF THE DRAWINGS

### DESCRIPTION OF THE DRAWINGS

FIG. 1 is a schematic diagram in which a system directly authorizes a user in the prior art;
FIG. 2 is a schematic diagram in which a system authorizes a role of a group or class nature in the prior art;
FIG. 3 is a schematic diagram in which a system both directly authorizes a user and authorizes a role of a group or class nature in the prior art;
FIG. 4 is a flowchart of a method for setting up an approval role according to a department by an approval node in a workflow according to the present invention;
FIG. 5 is a schematic diagram of a workflow according to the present invention; and
FIG. 6 is another flowchart of a method for setting up an approval role according to a department by an approval node in a workflow according to the present invention.

### DETAILED DESCRIPTION

### Description of Embodiments

The technical solutions of the present invention will be described in further detail below with reference to the accompanying drawings, but the protection scope of the present invention is not limited to the following descriptions.

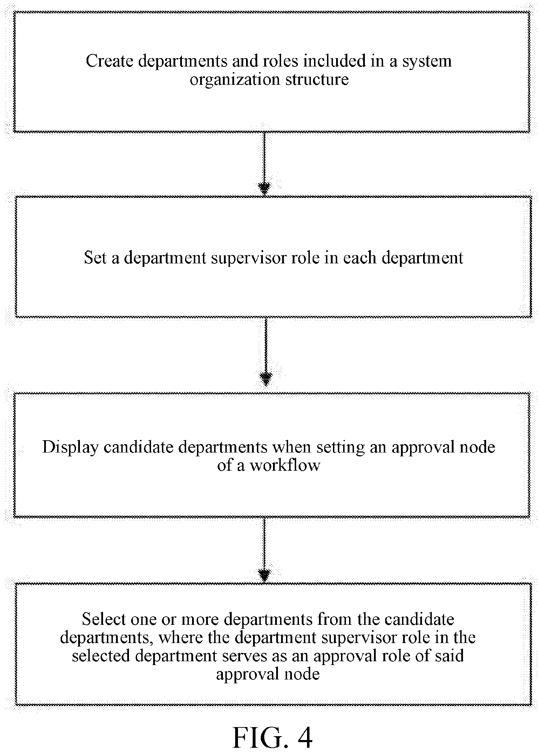

[Embodiment 1] As shown in FIG. 4, a method for setting up an approval role according to a department by an approval node in a workflow includes: creating departments and roles included in a system organization structure.

Definition of a role: A role is not of the nature of a group/class/category/post/position/work type or the like, but is of a non-collective nature. The role is unique and is an independent individual. Applied in an enterprise or an institution, the role is equivalent to a post number (the post number herein is not a post, and one post may have multiple employees at the same time, but one post number can only correspond to one employee during the same period).

For example, in a company system, the following roles may be created: a general manager, a deputy general manager 1, a deputy general manager 2, a manager of Beijing sales department I, a manager of Beijing sales department II, a manager of Beijing sales department III, a Shanghai sales engineer 1, a Shanghai sales engineer 2, a Shanghai sales engineer 3, a Shanghai sales engineer 4, a Shanghai sales engineer 5, and so on. The relation between users and roles is as follows: if Zhang San, the company's employee, serves as a deputy general manager 2 of the company and also serves as a manager of Beijing sales department I, roles to which Zhang San needs to be related are the deputy general manager 2 and the manager of Beijing sales department I, and Zhang San owns the permissions of the two roles.

The concept of conventional roles is a group/class/post/position/work type in nature, and one role can correspond to multiple users. However, in the present application, the concept of "role" is equivalent to a post number/work station number, and is also similar to the role in a film and television drama: one role in the same period (in childhood, juvenile, middle-age...) can be played by only one actor or actress at the same time, but one actor or actress may play multiple roles.

Each role is an independent individual rather than a group or class, one role can only be related to a unique user during the same period, and one user is related to one or more roles.

The role belongs to a certain department, and the role is authorized according to work content of the role; the role consists of a name and a number, the name of the role is unique under the department, and the number of the role is unique in a system.

During cross-department transfer of the user, the user's relation to the role in the original department is canceled, and the user is related to a role in a new department. After the role is created, a user may be related to the role in the process of creating the user, or may be related to the role at any time after the user is created. After the user is related to the role, the user can be released from the relation to the role at any time, and the relation between the user and another role may be created at any time.

The user determines permissions through its relation to the role, one employee corresponds to one user account, and one user account corresponds to one employee.

Setting a department supervisor role in each department.

Displaying candidate departments when setting an approval node of a workflow. Display forms of the candidate departments include a list, an organization structure tree diagram, and an organization structure architecture diagram.

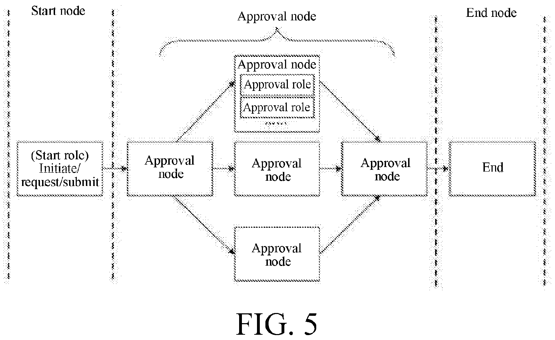

As shown in FIG. 5, a method for generating the workflow includes: building a three-layer structure model of user-role-permission that includes: a role layer, where an operation subject of process approval in the workflow is a role, each role is an independent individual rather than a group or class, one role can only be related to a unique user during the same period, and one user is related to one or more roles; a permission layer composed of permissions required to be used in the execution of the workflow, where the permissions are directly granted to the role; and a user layer, where a user determines an approval task in the workflow through the related role, and performs an approval operation with the permissions of the related role; using the three-layer structure model to control the workflow, where one approval process includes: one start node, where a node initiating or requesting or submitting the workflow serves as the start node or the first approval node serves as the start node; at least one approval node granting (or setting) an approval permission to a corresponding approval role; and one end node at which the approval process is ended, where the end node does not perform an approval operation, or the last approval node serves as the end node and the end node needs to perform an approval operation; and determining, according to a user's related role, an approval task to be processed, and performing an approval operation with the permission of the related role.

Selecting one or more departments from a list of the candidate departments, where the department supervisor role in the selected department serves as an approval role of said approval node.

[Embodiment 2] In this embodiment, setting of an approval role in a leave application workflow is used as an example to illustrate the present invention.

A company includes an administrative department and a sales department. There are a role A, a role B, and a role C in the sales department, and there are a role D, a role E, and a role F in the administrative department, where the role A is a department supervisor role in the sales department and the role D is a department supervisor role in the administrative department. All applications for leave in the company need to be approved by the administrative department. Setting an approval node in a leave application workflow specifically includes the following steps: creating a sales department and an administrative department, where there are a role A, a role B, and a role C in the sales department, and there are a role D, a role E, and a role F in the administrative department.

The role A is set as a department supervisor role in the sales department, and the role D is set as a department supervisor role in the administrative department.

One approval node is selected in the leave application workflow, where candidate departments are displayed at this time, and the candidate departments include the sales department and the administrative department.

The administrative department is selected, where in this case, the department supervisor role in the administrative department serves as an approver at the node, that is, the role D serves as an approval role of the approval node.

It is assumed that due to adjustment of work division in the administrative department, the role E serves as a new department supervisor role in the administrative department. In this case, the role E is the approval role of the approval node, and it is unnecessary to reset an approval role.

It is assumed that the user to which the role D is related changes from Zhang San to Li Si, it is also unnecessary to set an approval role again.

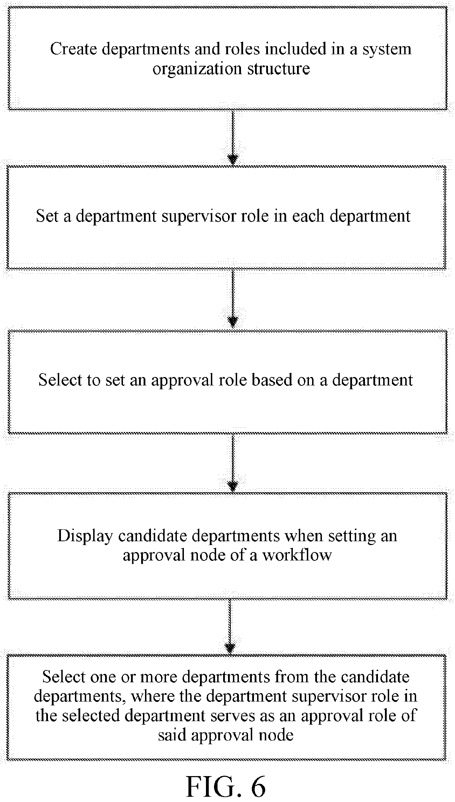

[Embodiment 3] As shown in FIG. 6, a method for setting up an approval role according to a department by an approval node in a workflow includes: creating departments and roles included in a system organization structure; setting a department supervisor role in each department; selecting (configuring) to set an approval role based on a department; displaying candidate departments when setting an approval node of a workflow; and selecting one or more departments from the candidate departments, where the department supervisor role in the selected department serves as an approval role of the approval node.

The above is only a preferred embodiment of the present invention, and it should be understood that the present invention is not limited to the forms disclosed herein, and is not to be construed as being limited to the other embodiments, but may be used in various other combinations, modifications and environments. Modification can be made in by the techniques or knowledge of the above teachings or related art within the scope of the teachings herein. All changes and modifications made by those skilled in the art are intended to be within the protection scope of the appended claims.

## Claims

1. A method for setting up an approval role according to a department by an approval node in a workflow, comprising:
creating departments and roles comprised in a system organization structure;
setting a department supervisor role in each department;
displaying candidate departments when setting an approval node of a workflow; and
selecting one or more departments from the candidate departments, wherein the department supervisor role in the selected department serves as an approval role of said approval node.

2. The method for setting up an approval role according to a department by an approval node in a workflow according to claim 1, wherein each role is an independent individual rather than a group or class, one role can only be related to a unique user during the same period, and one user is related to one or more roles.

3. The method for setting up an approval role according to a department by an approval node in a workflow according to claim 2, wherein a method for generating the workflow comprises:
building a three-layer structure model of user-role-permission that comprises:
a role layer, wherein an operation subject of process approval in a workflow is a role, each role is an independent individual rather than a group or class, one role can only be related to a unique user during the same period, and one user is related to one or more roles;
a permission layer composed of permissions required to be used in the execution of the workflow, wherein the permissions are directly granted to the role; and
a user layer, wherein a user determines an approval task in the workflow through the related role, and performs an approval operation with the permission of the related role;
using the three-layer structure model to control the workflow, wherein one approval process comprises:
one start node initiating the approval process;
at least one approval node granting an approval permission to a corresponding approval role; and
one end node, at which the approval process is ended; and
determining, according to the user's related role, an approval task to be processed, and performing an approval operation with the permission of the related role.

4. The method for setting up an approval role according to a department by an approval node in a workflow according to claim 3, wherein only a role having the permission to initiate a workflow can initiate or request or submit the workflow as a submission role.

5. The method for setting up an approval role according to a department by an approval node in a workflow according to claim 2, wherein the role belongs to a certain department, and the role is authorized according to work content of the role.

6. The method for setting up an approval role according to a department by an approval node in a workflow according to claim 5, wherein a name of the role is unique under the department, a number of the role is unique in a system.

7. The method for setting up an approval role according to a department by an approval node in a workflow according to claim 5, wherein during cross-department transfer of the user, the user's relation to the role in the original department is canceled, and the user is related to a role in a new department.

8. The method for setting up an approval role according to a department by an approval node in a workflow according to claim 2, wherein the user determines permissions through its relation to the role, one employee corresponds to one user account, and one user account corresponds to one employee.

9. The method for setting up an approval role according to a department by an approval node in a workflow according to claim 1, wherein display forms of the candidate departments comprise a list, an organization structure tree diagram, and an organization structure architecture diagram.

10. A method for setting up an approval role according to a department by an approval node in a workflow, comprising:
creating departments and roles comprised in a system organization structure;
setting a department supervisor role in each department;
selecting to set an approval role based on a department;
displaying candidate departments when setting an approval node of a workflow; and
selecting one or more departments from the candidate departments, wherein the department supervisor role in the selected department serves as an approval role of said approval node.
